(19) **Europäisches Patentamt / European Patent Office / Office européen des brevets**

(11) **EP 2 578 963 A1**

(12) **EUROPEAN PATENT APPLICATION**
published in accordance with Art. 153(4) EPC

(43) Date of publication:
**10.04.2013 Bulletin 2013/15**

(51) Int Cl.:
*F24J 2/10* (2006.01)    *F24J 2/24* (2006.01)
*F24J 2/54* (2006.01)

(21) Application number: **11789289.3**

(22) Date of filing: **27.05.2011**

(86) International application number:
**PCT/ES2011/000171**

(87) International publication number:
**WO 2011/151483 (08.12.2011 Gazette 2011/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **01.06.2010  ES 201000717**

(71) Applicants:
• **Universidad Politécnica De Madrid**
  **28040 Madrid (ES)**
• **Universidad Nacional De Educación**
  **A Distancia (U.N.E.D.)**
  **28015 Madrid (ES)**

(72) Inventors:
• **MARTÍNEZ-VAL PEÑALOSA, José María**
  **E-28040 Madrid (ES)**
• **VALDÉS DEL FRESNO, Manuel**
  **E-28040 Madrid (ES)**

• **ABANADES VELASCO, Alberto**
  **E-28040 Madrid (ES)**
• **AMENGUAL MATAS, R. Rubén**
  **E-28040 Madrid (ES)**
• **MUÑOZ ANTÓN, Javier**
  **E-28040 Madrid (ES)**
• **PIERA CARRETE, Mireia**
  **E-28015 Madrid (ES)**
• **MONTES PITA, María José**
  **E-28015 Madrid (ES)**
• **ROVIRA DE ANTONIO, Antonio**
  **E-28015 Madrid (ES)**

(74) Representative: **Carvajal y Urquijo, Isabel et al**
**Clarke, Modet & Co.**
**c/ Goya, 11**
**28001 Madrid (ES)**

(54) **PANEL HAVING LONGITUDINAL MIRRORS FOR A SOLAR POWER PLANT**

(57)    The invention relates to a solar power plant having mirrors (7) and horizontal longitudinal panels (1), whose turn axes and axes of symmetry (14) are parallel to the long axis of the solar panel, which consists of a balanced expansion and pressure collector, the tubes (19) of which are grouped in independent central (20) and adjacent (21 and 22) bundles, thermally isolated from each other longitudinally, the heating fluid circulating first through both adjacent bundles in parallel, to be subsequently injected into the central bundle, wherein the intensity of the solar radiation collected is greater owing to the solar radiation collected from the array of mirrors focused on the mid-line of the active side (2) of the panel; each bundle of tubes may be covered by a separate (60, 61, 62), transparent window (28).

Figure **4**

**Description**

Field of the Art

The invention is encompassed within the field of solar energy power plants requiring concentration of source radiation, which in this case is reflected by a series of longitudinal, horizontal or slightly inclined mirrors which can be oriented by rotating about their longitudinal axis of symmetry; the reflected radiation being focused on an also longitudinal receiver, with its long axis being horizontal or slightly inclined, and with a certain transverse inclination.

The receiver is intended for transferring a substantial part of the energy produced by the photons of the solar radiation striking the receiver to a fluid. To that end the receiver will have an active surface or face with suitable optical and thermal properties, consisting of having high absorptivity to solar radiation and a low typical emissivity. That active face should be thermally connected to a group of parallel tubes the axes of which are in turn parallel to the longitudinal mirrors. A heat transfer fluid transporting the absorbed solar heat to a useful purpose, which will be a thermal application, and particularly a thermodynamic cycle, which will be applied to a high-temperature thermal solar power plant, usually intended for generating electricity, circulates through the inside of the tubes. The actual outer surface of the tubes where the radiation strikes can be the active face of the receiver, although other configurations are possible. In any case, the geometric and thermal structure of the receiver is a key factor for achieving the objective sought, requiring a high capture of heat by said fluid, called heat transfer fluid, in order for the fluid to reach the temperatures required by the thermal application.

Background of the Invention

This invention directly relates to two other inventions, the first inventor of which is the first inventor of this application. The first is a specific background document concerning the receiver and is Spanish patent ES 2 321 576 B2, granted on 13 October 2009 (Official Intellectual Property Bulletin (*Boletín Oficial de la Propiedad Industrial*)) and filed on 31.12.2008, with no. P200803767. A balanced expansion and pressure receiver, ideal for receiving radiation on a facade type surface, although having a geometry adaptable to the field of mirrors from which it receives the radiation, is presented in this invention.

The second invention is another application from the same holder and the same inventors as this one, entitled SOLAR RADIATION CONCENTRATING DEVICE, WITH LONGITUDINAL MIRRORS AND RECEIVER, filed in the SPTO with no. P201000644. In it the position, size and curvature requirements for mirrors are established, as well as position and size of the receiver, although without giving any requirement as to the content of the latter given that said solar radiation concentrating device can be applied for any purpose. The receiver of the solar thermal power plant established in the present invention can also operate with radiation concentrated by any longitudinal device. Two background documents disclosing fields of mirrors and longitudinal receivers which are very representative of the state of the art as they are very close in time are mentioned below.

International application WO 2009/029277 A2 proposes a conventional Fresnel configuration with multi-tube receiver and many configuration variants, although without numerical assembly requirements, and with very generic claims; using planar and concave mirrors in Figures 3 and 4, without further specification, and concave mirrors in Figure 12, also relating to the configuration of hydraulic circuits in the multi-tube receiver, although without grouping them in bundles with a different function because of receiving different levels of intensity, does not take into account the natural aperture of sunlight. WO 2009/023063A2 relates to a receiver inclined with respect to the ground, with an asymmetric structure to favour collecting radiation, but it does not approach grouping in bundles for a progressive heating of the heat transfer fluid without the unnecessary generation of entropy.

Technical Problem to Solve

A fundamental physical fact is that solar radiation is not perfectly collimated, but comes from the Sun, which has an optical aperture from Earth of 32' (sexagesimal minutes), its intensity being virtually uniform in the entire Sun, as corresponding to radiation emitted in a perfectly diffused manner from a spherical surface. This aperture means that the radiation striking a point of the Earth's surface is not simply made up of a ray from the Sun, but is a cone of rays the conical angle of which is precisely the aforementioned 32'. Therefore, and depending on the light reflection principle, a single ray does not emerge from the point in question, but a group of rays, or beam, with an aperture exactly equal to that of the striking beam, i.e., 32'. This aperture is equivalent to 0.0093 radians (or 1/107.5 radians), meaning that when the beam covers relatively long distances, the surface of its perpendicular section becomes increasingly larger, which produces a low intensity in the receiver absorbing solar radiation.

Moreover, when the radiations reflected by several mirrors are superimposed on the active face of the receiver, for increasing the intensity of the radiation, which is expressed in $W/m^2$ in the SI system, the surface distribution of the intensity shows important variations because it is greater in the central area, towards which the reflected light beams are focused, and is less towards the periphery of the active face of the receiver, where the intensity decreases like the sides of a bell curve.

A low value of radiation received prevents the heat transfer fluid circulating through the tubes of the receiver absorbing radiation from reaching high temperatures because not even the active face reaches them. In fact, the maximum absolute temperature which the active face of a receiver like the one proposed herein can reach depends on the following factors:

A = absorptivity of the active face to solar radiation.
E= emissivity of the active face (depending to a certain extent on the temperature of the active face).
I = intensity (W/m²) of the radiation received

The maximum absolute temperature T in K (Kelvin) which can be reached with those conditions is

$$T= (A \cdot I \cdot 10^8/5.67 \cdot E)^{1/4}$$

The above equation assumes that there is no heat transfer mechanism other than radiation on the active face of the receiver, implying that the heat capturing efficiency by the fluid would be nil. In reality, a large part of the heat will be transferred to the fluid, and there will further be convection and conduction losses, so the actual T of a receiver will always be below the aforementioned temperature, which has the advantage of demonstrating the dependence on temperature with respect to intensity, I. In qualitative terms it can be said that in complete thermal balance of a receiver, the temperature of its active face and the temperature of the fluid will be greater with higher intensities if other intervening factors remain constant.

On the other hand, if the different areas of the active face receiving a different intensity, they exchange said energy, the heat from the hotter parts passing to the less hot parts, the temperature becomes uniform, entropy increases and exergy decreases, negatively affecting the energy and exergy efficiencies of the purpose of the receiver, which is to heat the heat transfer fluid to a high temperature and with a sufficient flow rate.

Similarly, if two fluid streams at different temperatures are mixed, a temperature compensation averaged with the weights of the heat transfer capabilities takes place, entropy increases and exergy decreases. This means that mixing at different temperatures by conduction or at a flow rate level is detrimental to the goals of a thermal application.

Therefore, the technical problem this invention solves is using radiation reflected by a longitudinal mirror concentrator device such that high energy and exergy efficiency values are achieved despite the differences in intensity of the radiation received in the central part and in the peripheral part of the active face of the receiver.

The costs of producing thermal energy at a high temperature from solar radiation can be significantly reduced with a radiation receiver encased in a receptacle with special features to be a balanced expansion and pressure receptacle, and all as a result of obtaining a high enough concentration of solar radiation on the receiver, with a very simple, easy to maintain and clean field of mirrors. The receiver also has the advantages of not needing rotary joints in the tubes absorbing radiation, or welds between the tubes and their glass covers, like those needed in parabolic trough collectors currently on the market, which are the conventional configuration but have weak points like those indicated.

Description of the Invention

The invention consists of configuring the solar thermal power plant with the following elements:

- a longitudinal solar radiation receiver formed by bundles of parallel tubes contained inside a balanced expansion and pressure receptacle-collector that is much longer than it is wide, the group of outer surfaces of the tubes where the radiation strikes being the active face, or the active face or surface being where the radiation strikes, thermally connected to the surface of the tubes, and said receiver being able to be formed by a consecutive group of longitudinal receptacles, preferably balanced expansion and pressure receptacles, successively interconnected for the passage of the heat transfer fluid, said tubes having a horizontal longitudinal trajectory or with the inclination given to the mirrors; the mentioned tubes being grouped transversally in at least three longitudinal bundles, there being a central bundle of longitudinal tubes, and at least two adjacent bundles, one on each side of the central bundle, these bundles being able to go in the same receptacle or in adjacent receptacles, but in any case their heat transfer fluid streams not mixing when they pass through the receiver, the central bundle and adjacent bundles having longitudinal thermal insulation between them separating them;
- the percentage distribution of the total active surface of the receiver between the central bundle and the adjacent bundle of tubes being a value selected from the central bundle occupying 99% of the active surface, and the adjacent bundles occupying the rest; and the central bundle occupying 20%, and the adjacent bundles occupying the rest; giving 50% of the active surface occupied by the central bundle as a distribution reference value, and the adjacent bundles each occupying 25% of the total active surface of the receiver on either side;

- and said receiver being supported in height by pillars or structural frames, generally transversely braced, with an aboveground height in accordance with the reflection of the radiation reflected by the mirrors;
- and an array of longitudinal mirrors, the longitudinal axis of symmetry of each mirror being parallel to the longitudinal axis of the receiver, forming a direct solar radiation concentrating device, and the requirements of which do not from part of this invention, although these devices are essential for the operation of the power plant.

In a solar power plant there can be a plurality of these receiver-mirror arrays parallel to one another. They could have the same or different lengths according to the relief of the terrain, and these arrays could be hydraulically connected to one another through the heat transfer fluid circuit, either in series or in parallel, depending on thermal hydraulic design which is to be followed in each power plant, although the reference assembly is a parallel hydraulic connection, each collector taking the fluid from the pipe coming from the thermal application with the relatively cold fluid, and sending the fluid to the return pipe to said application once it is heated.

A fundamental issue of the invention is that the central bundles of each receiver receive the most concentrated radiation while the adjacent bundles receive the least concentrated peripheral radiation since mirror focus requirements establish that the normal to each mirror at the central point of its perpendicular section at all times is the bisector of the angle formed by the sun ray striking that point and the line joining said point with the central point of the perpendicular section of the receiver, that perpendicular section corresponding to the same section, transverse to the longitudinal axis, as that of the perpendicular section of the mirror. All this is expressed in the working plane.

The invention can preferably be made in two geographic configurations: according to the local meridian, or North-South, and according to the local latitude, or East-West.

A dual assembly with two symmetrical receiver assemblies opposite one another, with the respective active faces pointing to the corresponding field of mirrors is used as a reference configuration in both arrangements, according to the meridian or according to the latitude. In that basic though not the only assembly of the invention, the receivers serve as outflow and return means in the heat transfer fluid hydraulic circuit, said fluid being heated by the radiation reflected by the two parallel fields of mirrors, one of them reflecting at that time on the first receiver, and the other field on the other side of the receivers reflecting on the second receiver. The difference that may exist between one field of mirrors and the other due to the position of the Sun at that time will thus be compensated. However, variants which do not follow that concept and which only use one receiver with its corresponding field of mirrors on only one side, i.e., on the side of its active face, are contemplated.

In the dual or reference assembly with two receivers opposite one another by their rear faces, the heat transfer fluid first flows through the adjacent bundles of one of the receivers, specifically the one receiving less solar intensity of the two at that time, then passes to the adjacent bundles of the receiver of the other face, and after running through it longitudinally, the pooled heat transfer fluid from both bundles passes to the central bundle of the first receiver, flowing along it to then pass to the central bundle of the second receiver, whereby ending the heat transfer fluid heating process, the heating process thus being optimised for achieving the highest possible temperature with the available solar conditions, using the area of the highest concentration of radiation for the final heating.

In the arrangement with a single receiver and a single array of mirrors, the heat transfer fluid first circulates in parallel through the adjacent bundles in one direction, and all the fluid returns through the central bundle of the same receiver in the opposite direction, for which purpose it is injected into the central bundle from the adjacent bundles.

A fluid circulation variant in dual assemblies is that the fluid does not pass from one receiver to another in double outflow and return, but circulates as in the case of a single receiver, through both receivers independently, the heat transfer fluid first circulating in parallel through the adjacent bundles in one direction, and all the fluid returning through the central bundle in the opposite direction, for which purpose it is injected into the central bundle from the adjacent bundles.

The corresponding group of controllable pumps and valves is arranged external to the receiver itself but essential for the operation of the invention for forcing the heat transfer fluid to follow these movements through the described circuits.

The width of the active surface of the receiver, referred to as R, is determined depending on the natural aperture of solar radiation of 0.0093 radians, and the straight line distance from the central point of the final mirror of the field to the central point of the receiver, and 1% of said distance corresponds specifically as a reference value for said width, values greater than 5% or less than 0.1% being able to be chosen without compromising the principle of the invention, although the power plant efficiencies are different from those obtainable with the reference value, which always produces efficiencies close to optimal efficiency.

In its basic version, the receiver is built with a trapezoidal perpendicular section, its outer transparent surface or transparent window having a greater width than the width of the active face in which the radiation is absorbed and which is connected to or coincides with the central and adjacent bundles of tubes inside which the heat transfer fluid circulates. These bundles of tubes are kept in their positions by the bent tubes traversing the receptacle of the receiver, which is suspended from the securing columns or frames through the attachment part. The receptacle has open side walls at the end of which there are located the gaskets in which the transparent window is anchored. Said side walls have an opening at the lower end parallel to the line joining that end of the active face to the closest point of the mirror closest to the receiver, the opening at the upper end being parallel to the line joining that end of the active face to the point furthest from the mirror furthest from the receiver. All this is expressed in the working plane.

The central and adjacent bundles have a longitudinal thermal insulation between one another separating them for the purpose of minimising the loss of high temperature heat involved in the heat transfer from the central bundle to the adjacent bundles, which would be in detriment to the good exergetic balance of the system.

A structural variant consists of arranging the bundles of longitudinal tubes of the receiver obliquely to one another, the entire angle through which the radiation arrives being covered by the active surface of the tubes as a result of the covering provided by the bundles, there even being a small area in which a shadow of the end of one bundle is cast on the contiguous bundle, with an extension no greater than half the radius of the tube in the shadow without there being physical contact between the ends of both bundles, and thermal insulation parts further preventing the passage of convection currents being able to be interposed between them without physical contact with both at the same time if there is filling gas in the receptacle of the receiver.

The width of the active face of the receiver is the distance between the end points of the adjacent bundles on each side. The group of bundles does not have to be symmetrical with respect to the central point, although symmetry may have constructive advantages. The most extreme ray of radiation reflected up strikes the upper end point of the active face, and the most extreme ray of radiation reflected down strikes the lower end point.

With this trapezoidal arrangement, the intensity of the radiation traversing the transparent window, which is never perfectly transparent, is less than the intensity received on the active face. This reduces the thermal load due to the radiation deposited on the transparent surface, which is important because it is not a cooled element.

As an assembly variant, the transparent surface can be made of partial windows, each covering one bundle, and may not be planar but dome-shaped, either with a semicircular perpendicular section, or with a pointed perpendicular section, the intermediate supports of the partial windows coinciding with the thermal insulations separating the central bundle from the two adjacent bundles.

With respect to the height for locating the receiver, it is deduced by the details that the angle of vision of the central point of the receiver from the central point of the furthest mirror is selected in a range of values between 10º and 80º, with an optimal value of 45º, measured on the horizontal of the location; and the inclination of the active face of the receiver being determined in that the segment marking said surface in the working plane is perpendicular to the bisector of the field, said bisector being that of the angle formed by the lines going, respectively, from the central point of the active face of the receiver to the central point of the mirror closest to the receiver and to the central point of the furthest mirror.

Description of the Drawings

The drawings are not to scale since the width of the receiver and mirrors will be will be considerably less than their length and also much less than the height at which the receiver is supported.

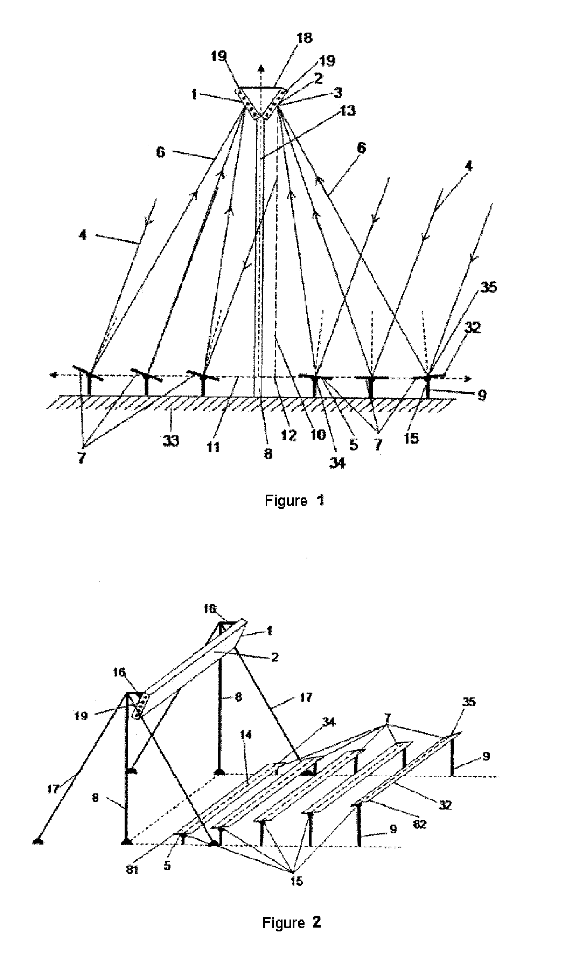

Figure 1 shows a perpendicular section diagram of the solar power plant corresponding both to an assembly according to the meridian and to a dual assembly according to the latitude, with an array of mirrors to the north and another to the south of the respective collectors in this case.

Figure 2 shows the three-dimensional diagram of a receiver-mirror assembly in the assembly according to the latitude, with an arrangement to the north of the latitude in the northern hemisphere.

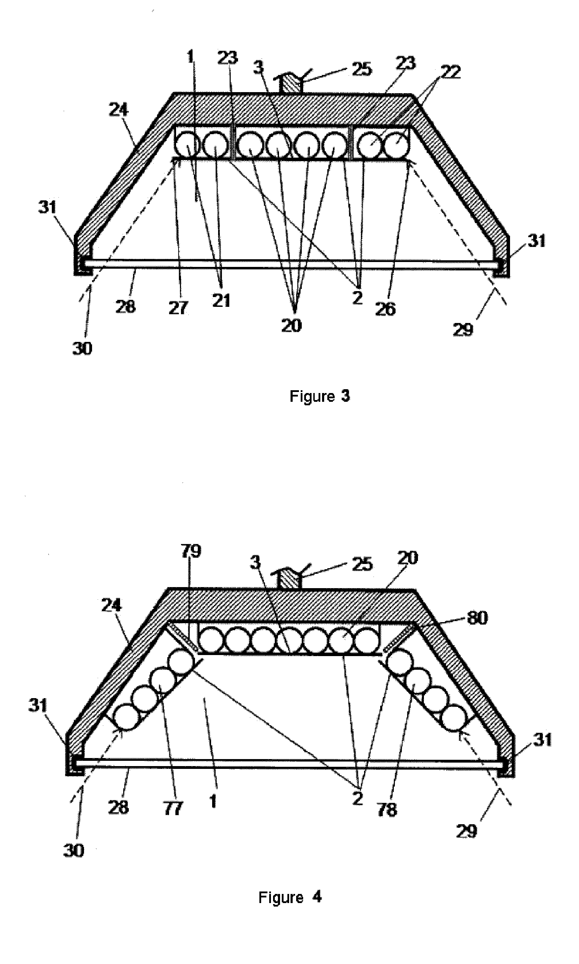

Figure 3 shows a cross-section view of the solar receiver in the geometry of the invention, where the four central tubes form the central bundle, and the two end tubes form the corresponding adjacent bundles on each side.

Figure 4 shows a cross-section view of the solar receiver similar to the preceding view but with the bundles of adjacent tubes inclined with respect to the main bundle, which allows better thermal separation between them and not losing radiation collecting capacity due to the insulation.

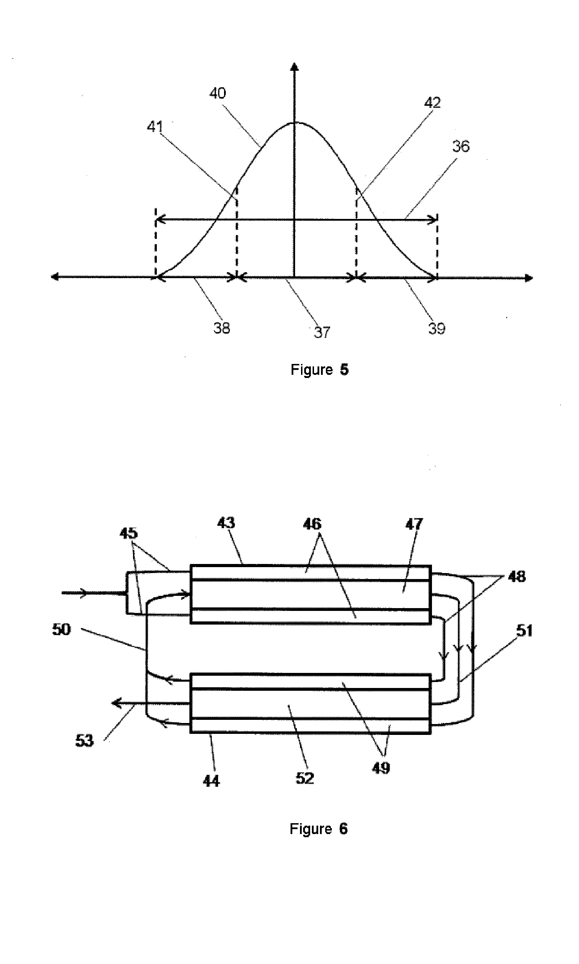

Figure 5 shows the profile of the intensity received on the active face of the receiver with a maximum in the centre corresponding to the central point of the cross-section of the receiver.

Figure 6 shows the circulation diagram of the heat transfer fluid in the basic assembly of two receivers geometrically assembled in parallel and hydraulically assembled in series with the active faces opposite one another facing outwards.

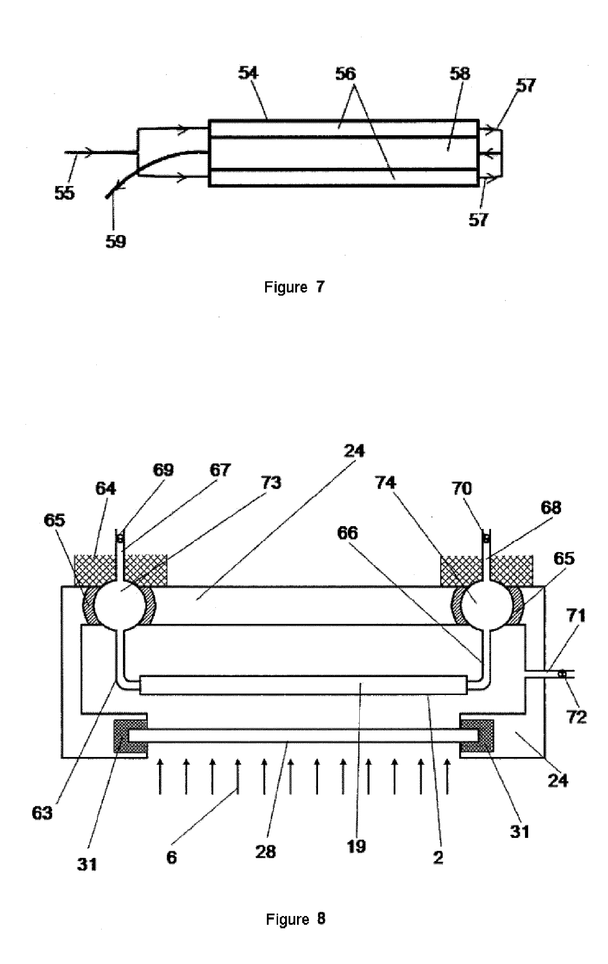

Figure 7 shows the circulation diagram of the heat transfer fluid in the assembly of one receiver, or two parallel receivers opposite one another but operating independently in hydraulic operating conditions.

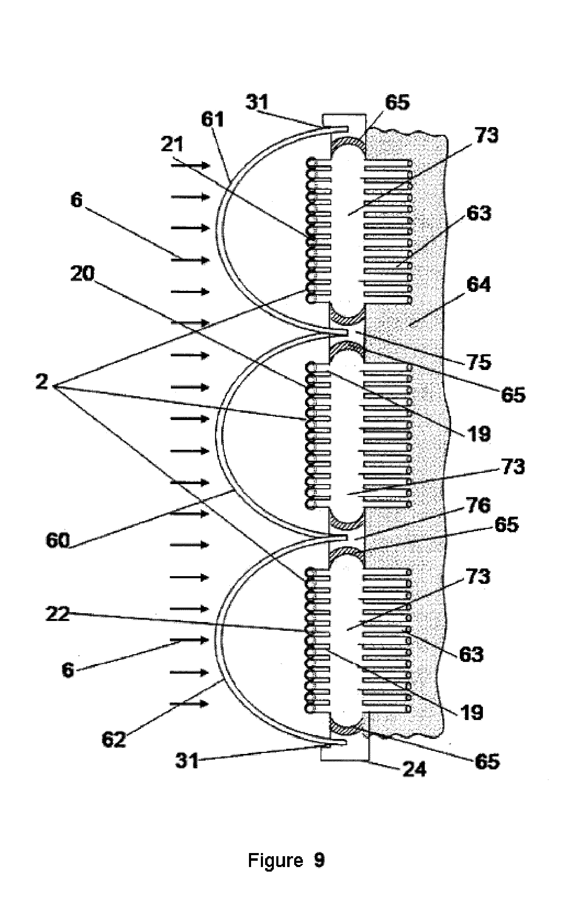

Figures 8 and 9 relating to the type of collector referred to as a balanced expansion and pressure collector, which is one of the generic system models which could be used as a basis for the application of the invention, are added as a depictive complement. Therefore, the figures are from document ES 2 321 57682 cited above as background, and is merely illustrative.

Figure 8 shows the longitudinal diagram of a balanced expansion and pressure collector in which the circulation of the heat transfer fluid goes from left to right. The assembly is actually much longer in the longitudinal direction from left to right than from top to bottom in the drawing.

Figure 9 shows a cross-section view of the solar receiver in the variant of separating the bundles of tubes in adjacent receptacles, although the physical separation between them, including the insulation, is much less than the width of each bundle and is not to scale in the drawing. The windows of each bundle are pointed or semicircular in their perpendicular section.

Embodiments of the Invention

The relevant elements of the drawings of the invention are listed below in order to facilitate understanding of the drawings and embodiments of said invention:

1. Receiver for concentrated solar radiation (6).
2. Active surface or face of the receiver (1).
3. Central point of the segment representing the active face (2) of the receiver (1), in its perpendicular cross-section.
4. Direct solar radiation.
5. Longitudinal mirror reflecting the original solar radiation on the receiver (1), and which is closest to the receiver.
6. Solar radiation reflected by the mirrors (7).
7. Generic mirror which is struck by solar radiation (4) which is reflected as concentrated radiation (6) on the receiver (1). There is a plurality of parallel mirrors reflecting the radiation on the same receiver (1). There can be more than one field of mirrors in a power plant, each focused on a receiver or lineal series of receivers.
8. High columns or pillars maintaining the solar receiver (1) and all its internal elements at their height and in position.
9. Low pillars maintaining the axes of the mirrors generically depicted as (7) at their height and in position.
10. Y-axis of the working plane for a specific field of mirrors which is the vertical axis passing through the central point (3) of the active face (2) of the receiver (1) receiving the radiation reflected (6) by the array of mirrors (7).
11. X-axis of the working plane which is the horizontal line passing through the central point of the mirror (5) closest to the receiver (1), and is therefore perpendicular the y-axis (10).
12. Point of origin which is the intersection between axes (10) and (11).
13. Vertical axis of symmetry in dual assemblies different from axis (10) determining the reference coordinate system in each case.
14. Longitudinal axis of a generic mirror (7) about which it rotates for acquiring the transverse inclination necessary in the working plane.
15. Rotating junction of the pillar (9) with the rotating shaft (14) of the generic mirror (7) as the result of a bearing.

16. Securing part for firmly securing the receiver (1) to the column (8) in the upper part, allowing the receiver to expand vertically, maintaining its angle of inclination. It can have various configurations.
17. Transverse bracing cables for bracing the pillars or columns (8).
18. Upper crosspiece for stiffening the receivers in double or dual assemblies.
19. Group of longitudinal tubes grouped in bundles inside the receiver (1) of solar radiation (6), inside which the heat transfer fluid circulates, carrying most of the heat deposited by the radiation on the active surface (2) of the receiver (1).
20. Central bundle of tubes (19).
21. Adjacent bundle of tubes on one side of the central bundle.
22. Adjacent bundle of tubes on the other side of the central bundle.
23. Thermal insulation longitudinally interposed between the central bundle (20) and the adjacent bundles (21), (22).
24. Main body of the receptacle of the receiver (1).
25. Securing element for securing the receptacle (24) attached to the part (16) in the support columns or pillars of the receiver (1).
26. Upper end point of the active surface (2).
27. Lower end point of the active surface (2).
28. Transparent window of the receiver (1).
29. Upper end ray of those reflected by the mirrors (7) pointed towards the receiver (1), striking point (26).
30. Lower end ray of those reflected by the mirrors (7) pointed towards the receiver (1), striking point (27).
31. Securing gaskets for securing the transparent surface (28) to the main body (24) of the receiver (1).
32. Mirror furthest from the receiver (1).
33. Ground and foundation.
34. Central point of the mirror (5) closest to the receiver.
35. Central point of the mirror (32) furthest from the receiver.
36. Transverse width of the active face (2) of the receiver (1) where the concentrated radiation (6) strikes.
37. Transverse width of the active face (2) of the receiver (1) corresponding to the central bundle (20).
38. Transverse width of the active face (2) of the receiver corresponding to the adjacent bundle (21).
39. Transverse width of the active face (2) of the receiver corresponding to the adjacent bundle (22).
40. Transverse profile of the intensity (W/m$^2$) of the radiation striking the active face (2) of the receiver (1).
41. Separation by means of thermal insulation between the active face of the adjacent bundle (21) and the central bundle (20). It can be made with various configurations.

42. Separation by means of thermal insulation between the active face of the adjacent bundle (22) and the central bundle (20). It can be made with various configurations.

43. First receiver in a dual assembly corresponding to the one receiving less radiation intensity.

44. Second receiver in a dual assembly.

45. Hydraulic connectors from the pipe of relatively cold fluid coming from the thermal application entering the adjacent bundles of the first receiver (43).

46. Adjacent bundles of the first receiver (43).

47. Central bundle of the first receiver (43).

48. Hydraulic connectors from the adjacent bundles of the first receiver (43) to those of the second receiver (44).

49. Adjacent bundles of the second receiver (44).

50. Hydraulic connectors from the adjacent bundles of the second receiver (44) to the main bundle (47) of the first receiver (43).

51. Hydraulic connector connecting the central bundle (47) of the first receiver (43) to that of the second one (44).

52. Central bundle of the second receiver (44).

53. Hydraulic connector connected to the pipe of heated fluid going to the thermal application from the central bundle (52) of the second receiver (44).

54. Receiver assembled in single or dual arrangement but with an independent heat transfer fluid circuit.

55. Hydraulic connectors from the pipe of relatively cold fluid coming from the thermal application entering the adjacent bundles of the insulated receiver (54).

56. Adjacent bundles of the insulated receiver (54).

57. Hydraulic connectors from the adjacent bundles of the insulated receiver (54) to the main bundle of said receiver.

58. Central bundle of the insulated receiver (54).

59. Hydraulic connector connected to the pipe of heated fluid going to the thermal application from the central bundle (58) of the insulated receiver (54).

60. Transparent pointed window of the central bundle (20).

61. Transparent pointed window of the adjacent bundle (21).

62. Transparent pointed window of the adjacent bundle (22).

63. Bent connection tubes connecting the inner tubes (19) of the receiver (1, 43, 44, 54) with the outer conduits for heat transfer fluid entrance.

64. Thermal insulation in the rear part of the receptacle (24).

65. Pressure gasket of the collector cylinders (73) and (74) of the tubes (19) of the receiver (1, 43, 44, 54), between the inlet and outlet junction.

66. Bent connection tubes connecting the inner tubes (19) of the receiver (1, 43, 44, 54) with the outer conduits for heat transfer fluid exit.

67. Inlet conduit for conducting the heat transfer fluid to the receiver (1, 43, 44, 54).

68. Outlet conduit for conducting the heat transfer fluid from the receiver (1, 43, 44, 54).

69. Shut-off and regulating valve for shutting-off and regulating the passage of the fluid through the inlet conduit (67).

70. Shut-off and regulating valve for shutting-off and regulating the passage of the fluid through the outlet conduit (68).

71. Gas extraction conduit for creating a vacuum in the receptacle (24).

72. Shut-off and closing valve for shutting-off and closing the vacuum-creating conduit (70).

73. Collector cylinder of the tubes (19) of the receiver at the inlet junction.

74. Collector cylinder of the tubes (19) of the receiver at the outlet junction.

75. Physical separation between the central bundle (20) and the adjacent bundle (21) which forms the thermal separation (41) in the case of Figure 9.

76. Physical separation between the central bundle (20) and the adjacent bundle (22) which forms the thermal separation (42) in the case of Figure 9.

77. Adjacent bundle similar to (21) in the case of an assembly with oblique bundles.

78. Adjacent bundle similar to (22) in the case of an assembly with oblique bundles.

79. Physical separation between the central bundle (20) and the adjacent bundle (77) forming the thermal separation (41) in the case of Figure 4.

80. Physical separation between the central bundle (20) and the adjacent bundle (78) forming the thermal separation (42) in the case of Figure 4.

81. Closest point of the mirror (5) closest to the receiver.

82. Furthest point of the mirror (5) furthest from the receiver.

The invention requires arranging a group of high pillars or columns (8) forming a longitudinal line like that shown in Figures 1 and 2, the receiver (1) being supported in said line of pillars, usually in a dual version, although in some assemblies, especially in the east-west direction, a single receiver can be chosen, as in Figure 2. The array of longitudinal mirrors (7) supported on their solid turn axes (14), in turn supported by lines of low pillars (9) which intersect the latter in the rotating junction parts (15), is arranged parallel to that line. Taking into account that the arrangement is uniform in the longitudinal direction and can have the desired length, the description of the invention and its quantitative details are in the corresponding working plane, which is always normal to the longitudinal assembly axes, which are parallel to one another.

The receiver (1) is an elongated, balanced expansion and pressure type receptacle the active surface (2) of which is highly absorbent to solar radiation (4) and is struck by the radiation reflected (6) by each mirror (7) of the array. The tubes (19) through which the heat transfer fluid passes are grouped in at least three hydrodynamically independent bundles, a central bundle (20), which occupies the central half of the active surface of the receiver (1) as a reference value, and two other adjacent bundles on one side (21) and on the other side (22) of the central bundle (20), each occupying 25% of the active surface (2) as a reference value. Figure 3 depicts a cross-section of this arrangement bearing in mind that the receivers are positioned according to that indicated in Figures 1 and 2.

There is a variant which allows using certain advantages in the collection of radiation and in the effective separation of the bundles. To that end, and in line with the trapezoidal section of the receptacle (24), the bundles of longitudinal tubes (19) are arranged obliquely to one another, the central bundle occupying the central wall of the bottom of the receptacle, while the adjacent bundles are placed parallel with a certain rotation with respect to the central bundle, as schematically illustrated in Figure 4. The group of bundles has a certain cavity shape, and the entire angle through which the radiation arrives is covered by the active surface of the tubes. To that end, a covering is made with the bundles which even creates a small area in which a shadow of the end of one bundle is cast on the contiguous bundle, with an extension no greater than half the radius of the tube in the shadow, but enough so as to not lose radiation in the gaps which there must be between the bundles to prevent heat transfer from the central bundle to the adjacent bundles. With such an oblique covering, there furthermore is no physical contact between the ends of both bundles, thermal insulation parts further preventing the passage of convection currents being able to be interposed between them without physical contact with both bundles at the same time if there is filling gas in the receptacle (24) of the receiver(1).

The receptacle (24) is built with a trapezoidal perpendicular section, its transparent outer window (28) having a greater width than the width of the rear wall, the receptacle (24) having open side walls at the end of which there are located gaskets (31) in which the transparent window (28) is anchored, the bundles of tubes being maintained in their positions by the bent tubes (63) and (66) and their collector cylinders (73) and (74) traversing the receptacle (24) of the receiver (1) which is suspended from the securing columns or pillars (8) through the attachment parts (16), (25).

The concentrated radiation (6) of the highest intensity (W/m$^2$) will strike the central bundle (20), and the two adjacent bundles (21, 77) on one side and (22, 78) on the other side collect radiation of less intensity, since the intensity will be virtually nil on the outer edge of their surfaces. Figure 5 depicts, transversally on the active face (2), the profile of the intensity I (40) in W/m$^2$ striking said face, where there will be a portion of it (36) in which the striking intensity (40) is not nil, the surface (37) corresponding to the central bundle (20) in which the value of the intensity is markedly greater than in the surfaces (38) and (39) corresponding to the adjacent bundles (21, 77) and (22, 78) which are physically separated from the central bundle (20) and thermally insulated from it through longitudinal insulations (23) which establish thermal separations (41) and (42) between the heat deposited per unit of surface area in the central bundle (20) and the adjacent bundles (21) and (22), those thermal separations (41) and (42) being formed by means of parts (75) and (76) if adjacent receptacles are used to differentiate the bundles, and by means of parts (79) and (80) in the case of assemblies of oblique bundles, being distinguished.

Each receptacle (24) for the receiver (1) is made with measurements according to the mechanical strength of the material used, the receptacles (24) being successively arranged, which is used for absorbing the expansions and contractions of the tubes (19) as a result of their bent inlet connections (67) and bent outlet connections (68), as seen in Figure 8, presented as illustrative complement, but without any claimed element relating to it directly. The fluid comes through the collecting conduit (67) from the outlet of the preceding receptacle or from the delivery pipe from the thermal application and is distributed through the tubes (19) of the bundle in question by means of a collector cylinder (73). Figure 9, which is also presented as an illustrative complement and also having no claimed element relating directly to it, best shows this arrangement, the central bundle (20) with its specific transparent window (60), separated from the adjacent bundles (21) and (22) with their respective windows (61) and (62) proposed as being pointed or semicircular for a better mechanical resistance of the inner vacuum, being distinguished. The bundles (20), (21), (22) are separated by thermal separations (75) and (76) in which the windows (60), (61), (62) are inserted. Pressure gaskets (65) of the collector cylinders with hemispherical heads rotating slightly for absorbing the changes in length of the tubes (19) and further supporting said tubes in position, are supported against said separations. A thermal insulation (64) encasing the outer connection tubes communicating one receptacle with the next receptacle, or with the general outer circuit for connection with the thermal application must be arranged in the rear part of the receptacle (24). Patent ES 2 321 576 82, which is the source of Figure 9, includes no proposal in the specification or any mention in the claims as to dividing the radiation absorbing tubes into bundles because of the hierarchy established between them depending on the level of radiation intensity received, or about the hydraulic path along which the heat transfer fluid runs through the various bundles. Dividing the tubes into several bundles in said patent is due to reducing the mechanical stress of the glass windows of each bundle, reducing the width thereof.

Each mirror is made to follow the same rotation specification pattern to provide the associated focusing on the Sun of the invention, and this is done using the normal to the mirror (7) in its central point in the projection of the mirror on the working plane as a tool. The mirror (7) rotates until this normal coincides with the bisector of the angle formed by the central ray of the solar beam striking the central point of the mirror (7) and the line joining said central point of the mirror with the central point (3) of the active surface (2) of the receiver (1), all expressed in the projection in the optical or working plane.

The inclination of the active surface (2) of the receiver (1) is defined in terms of this surface being normal to the bisector of the field from the central point (3) of the active face (2) of the receiver (1), said bisector being that of the angle which is formed with the lines going from the central point (3) of the active face (2) of the receiver (1) to the central point (34) of the mirror (5) closest to the receiver (1), and to the central point (35) of the furthest mirror (32). With respect to the height of the central point (3) of the active face (2) of the receiver (1), it is advisable to limit the angle of vision of the central point of the receiver from the central point (35) of the furthest mirror on the horizontal of the location to a value selected between 10º and 80º, with an optimal value 45º, through elemental geometric orientations.

As depicted in Figure 6, in dual assemblies with two symmetrical receivers (43) and (44) with faces opposite one another, the fluid is circulated through the adjacent bundles (46) of the first face, which is the one receiving less radiation intensity, after having received the fluid from the pipelines (45) supplying it in relatively cold conditions from the thermal application, and after that first passage, they are directed by means of an outer connection (48) to the adjacent bundles (49) of the second receiver (44), thus ending the pre-heating phase in which the values in the peripheral areas (38, 39) of the radiation sent by the field of mirrors (7) and striking the active face (2) of the receiver are used. The fluid from the adjacent bundles (49) of the second receiver (44) then enters the central bundle (47) of the first receiver (43) through an outer connection (50) where the levels of concentrated radiation are higher in intensity (37), this measurement being in watts per unit of surface area, making the fluid acquire higher temperatures, and this greater heating is completed when the fluid passes through the central bundle (52) of the second receiver (44), which it reaches from the central bundle (47) of the first receiver (43), through another outer connection (51), and from which it exits through the outer duct (53) to go to the thermal application, as shown in Figure 6. After that quadruple run, the fluid has the high temperature which is necessary for obtaining a good thermodynamic performance.

For assemblies like that shown in Figure 2 with a single receiver (1) or with two receivers (54) geometrically parallel to but hydraulically insulated from one another as shown in Figure 7, the fluid enters the adjacent bundles (56) through the collection (55) of fluid from the supply pipe coming from the thermal application, circulates in one direction through the adjacent bundles (56) and, when reaching the end of that first passage, is injected by means of an outer connection (57) into the central bundle (58), where it is heated to a high temperature and sent to the collection pipe (59) which carries it to thermal application.

Obviously the design of a power plant of this type will adjust the length of the receivers to totalize the desired thermal power, but this magnitude is not everything. The temperature reached, which is what gives the heated heat transfer fluid a high exergy, is very important, and to that end the invention contains that division of the active surface into at least the three aforementioned bundles. If the fluid were to pass through all the tubes, mixing from time to time or almost continuously, the fluid of the central tubes would lose its temperature when mixed with the low-temperature peripheral fluid, and the result of that mixture, as with that of any other, would be an increase in entropy and a loss of exergy. Hence the heating process is performed gradually and hierarchically in this invention, achieving not only that the heat transfer fluid carries a considerable amount of thermal energy, but also at a high temperature, which is very useful for obtaining good thermodynamic results.

Having clearly described the invention, it is hereby stated that the particular embodiments described above are susceptible to modifications in detail provided that they do not alter the fundamental principle and the essence of the invention.

## Claims

1. A receiver (1, 43, 44, 54) with longitudinal mirrors for a solar power plant, based on a balanced expansion and pressure collector or receptacle (24) receiving the radiation from an array of slightly concave mirrors (7) parallel to one another, having a markedly longitudinal geometry, i.e., being much longer than it is wide, which can rotate about their longitudinal axis of symmetry (14), which in turn is the axis serving as support in bearings, which are placed on the pillars (9) which, every certain length interval, are buried in the ground and rigidly support the mentioned bearings, therefore the securing shaft, which furthermore is a rotating shaft (14), is always fixed in that straight line position, each mirror (7) being orientated for reflecting radiation (6) towards at least one longitudinal solar receiver (1, 43, 44, 54), the longitudinal axis of symmetry thereof located at a height H above the height of the axis of the mirror (5) closest to the receiver (1, 43, 44, 54) as a result of columns or pillars (8) supporting it, with an active face (2) where it receives radiation (6) reflected by the mirrors (7); said receiver having a longitudinal geometry and its greatest length parallel to the longitudinal axes (14) of the mirrors (7), and having a certain angle of inclination transverse to the horizontal, there being a final mirror (32) furthest from the receiver (1, 43, 44, 54), two fields of mirrors (7) being able to be assembled symmetrically with respect to two parallel receivers (1, 43, 44, 54) with active faces (2) arranged opposite one another, each face pointing to a field, particularly in assemblies in which the longitudinal axes follow the local meridian, and being assembled both to the north and to the south of the receiver (1, 43, 44, 54) in cases in which the longitudinal axes (14) of the mirrors (7) are parallel to the local astronomical latitude, in which assemblies there can also be two parallel receivers (1, 43, 44, 54) with active faces (2) arranged opposite one another, each face pointing to a field, and in which the positions and angles are expressed in a coordinate system in the working plane used, which is always normal to the longitudinal assembly axes, which are parallel to one another; and the y-axis of the coordinate system in the working plane being the vertical line (10) passing through the central or mid-point (3) of the segment representing the active face (2) of the receiver (1, 43, 44, 54) in the working plane, and the x-axis (11) being the horizontal line passing through the central point (34) of the segment which, in the working plane, represents the mirror (5) closest to the receiver (1, 43, 44, 54), with a transverse width of the active surface or face (2) of the receiver selected from a value in the order of 1% of the·straight line distance between the central point (35) of the furthest mirror (32) of the field and the central point (3) of the active surface (2) of the receiver (1, 43, 44, 54); selecting the angle of vision of the central point (3) of the receiver (1, 43, 44, 54) from the central point (35) of the furthest mirror (32) in a range of values between 10° and 80°, with an optimal value of 45°, measured on the horizontal of the location;and the inclination of the active face (2) of the receiver (1, 43, 44, 54) being determined in that the segment marking said surface in the working plane is perpendicular to the bisector of the field, said bisector being that of the angle formed with the lines going, respectively, from the central point (3) of the active face (2) of the receiver (1, 43, 44, 54) to the central point (34) of the mirror (5) closest to the receiver, and to the central point (35) of the furthest mirror (32); a group of controllable pumps and valves being arranged which are external to the receiver itself but essential for the operation of the invention to force the heat transfer fluid to follow the required movements through the hydraulic circuits of the receiver; the solar radiation (6) reflected by the different mirrors (7) finally striking a receiver (1, 43, 44, 54) inside of which there are arranged longitudinal tubes (19) through which a heat transfer fluid feeding a thermal application circulates; the active face (2) of the receiver (1, 43, 44, 54) being the actual outer surface of the tubes (19) where the radiation (6) strikes, or the active face (2), where the radiation (6) strikes, being thermally connected with the surface of the tubes (19), which are grouped in at least three separate bundles, transversally, there being a central bundle (20) of longitudinal tubes, and at least two adjacent bundles (21) and (22), one on each side of the central bundle (20), these bundles being able to go in the same receptacle (24) or in adjacent receptacles, but in any case without mixing their heat transfer fluid streams when passing through the receiver (1, 43, 44, 54), the central bundle (20) and adjacent bundles (21) and (22) having longitudinal thermal insulation (23) between one another separating them; and the percentage distribution of the total active surface (2) of the receiver (1, 43, 44, 54) between the central bundle of tubes (20) and the adjacent bundles (21) and (22) being a value selected from the central bundle (20) occupying 99% of the active surface, and the adjacent bundles (21) and (22) occupying the rest; and the central bundle occupying 20%, the adjacent bundles (21) and (22) occupying the rest; giving 50% of the active surface occupied by the central bundle (20) as a distribution reference value and the adjacent bundles (21) and (22) each occupying 25% of the total active surface (2) of the receiver (1, 43, 44, 54) on either side, **characterised in that** the bundles of longitudinal tubes (19) of the receiver (1, 43, 44, 54) are arranged obliquely to one another, the entire angle through which the radiation arrives being covered by the active surface of the tubes as a result of the covering provided by the bundles, there even being a small area in which a shadow of the end of one bundle is cast on the contiguous bundle, with an extension no greater than half the radius of the tube in the shadow, without there being physical contact between the ends of both bundles, and thermal insulation parts further preventing the passage of convection currents being able to be interposed between them without physical contact with both at the same time if there is filling gas in the receptacle (24) of the receiver.

2. The receiver with longitudinal mirrors for a solar power plant according to the preceding claim, **characterised in that** in assemblies with two symmetrical receivers (43) and (44) with faces opposite one another, the fluid is received from the pipelines (45) supplying it, relatively cold, from the thermal application and is circulated through the adjacent bundles (46) of the first face, which is the one receiving less radiation intensity; and after that first passage they pass to the adjacent bundles (49) of the other receiver (44) by means of an outer connection (48), through which bundles they circulate, thus ending the preheating phase in which values of the peripheral areas (38), (39) of the radiation sent by the field of mirrors (7) and striking the active face (2) of the receiver are harnessed; the fluid from the adjacent bundles (49) of the second receiver (44) then entering into the central bundle (47) of the first receiver (43) through an outer connection (50), where levels of concentrated radiation are higher (37) in intensity, this being measured in watts per unit of surface area, making the fluid acquire higher temperatures as it passes through said bundle, and this greater heating is completed when the fluid passes through the central bundle (52) of the second receiver (44), which it reaches from the central bundle (47) of the first receiver (43), through another outer connection (51), and from which it exits through the outer duct (53) to go to the thermal application.

Figure 1

Figure 2

Figure 3

Figure 4

Figure **5**

Figure **6**

Figure 7

Figure 8

EP 2 578 963 A1

Figure 9

16

<div align="center">

## INTERNATIONAL SEARCH REPORT

</div>

| | International application No. |
|---|---|
| | PCT/ES2011/000171 |

**A. CLASSIFICATION OF SUBJECT MATTER**

**See extra sheet**

According to International Patent Classification (IPC) or to both national classification and IPC

**B. FIELDS SEARCHED**

Minimum documentation searched (classification system followed by classification symbols)
F24J

Documentation searched other than minimum documentation to the extent that such documents are included in the fields searched

Electronic data base consulted during the international search (name of data base and, where practicable, search terms used)

EPODOC, INVENES, WPI, XPESP

**C. DOCUMENTS CONSIDERED TO BE RELEVANT**

| Category* | Citation of document, with indication, where appropriate, of the relevant passages | Relevant to claim No. |
|---|---|---|
| A | WO 2009029277 A2 (AUSRA INC ET AL.) 05/03/2009, the whole document. | 1 |
| A | ES 2321576 A1 (UNIV MADRID POLITECNICA ) 08/06/2009, page 12, lines 50-60; claim 18; figure 14. | 1 |
| A | WO 2009029275 A2 (AUSRA INC ET AL.) 05/03/2009, the whole document. | 1,2 |
| A | DE 102008021730 A1 (SAMLAND UND AATZ GBR VERTRETUN) 06/11/2008, the whole document. | 1 |
| A | DE 102007052338 A1 (REV RENEWABLE ENERGY VENTURES) 07/05/2009, the whole document. | 1 |

☒ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 27/09/2011 | **(24/10/2011)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | D. Hermida Cibeira Telephone No. 91 3493026 |

Form PCT/ISA/210 (second sheet) (July 2009)

## INTERNATIONAL SEARCH REPORT

International application No.

PCT/ES2011/000171

C (continuation). DOCUMENTS CONSIDERED TO BE RELEVANT

| Category * | Citation of documents, with indication, where appropriate, of the relevant passages | Relevant to claim No. |
|---|---|---|
| A | JP 2008057823 A (MATSUSHITA ELECTRIC IND CO LTD ) 13/03/2008, figures & Abstract of the DataBase WPI. Retrieved from EPOQUE; Accession Number: 2008-D19333. | 1,2 |
| A | ITTNER, W. B. An array of directable mirrors as a photovoltaic solar concentrator. SOLAR ENERGY. 1980. Vol. 24, pages 221-234. DOI: 10.1016/0038-092X(80)90478-8. ISSN 0038-092X. the whole document. | 1 |
| A | VANT-HULL L. L. et al. Solar thermal power system based on optical transmission. SOLAR ENERGY. 1976. Vol. 18, pages 31-39. DOI: 10.1016/0038-092X(76)90033-5. ISSN 0038-092X. the whole document. | 1 |

Form PCT/ISA/210 (continuation of second sheet) (July 2009)

## INTERNATIONAL SEARCH REPORT

Information on patent family members

| | International application No. |
|---|---|
| | PCT/ES2011/000171 |

| Patent document cited in the search report | Publication date | Patent family member(s) | Publication date |
|---|---|---|---|
| WO2009029277 A | 05.03.2009 | WO2009023063 A | 19.02.2009 |
| | | WO2009029275 A | 05.03.2009 |
| | | AU2008293906 A | 05.03.2009 |
| | | AU2008293904 A | 05.03.2009 |
| | | US2009056703 A | 05.03.2009 |
| | | US2009056699 A | 05.03.2009 |
| | | US2009056701 A | 05.03.2009 |
| | | US2009084374 A | 02.04.2009 |
| | | MX2010002250 A | 01.06.2010 |
| | | MX2010002251 A | 01.06.2010 |
| | | EP2193314 A | 09.06.2010 |
| | | CN101836054 A | 15.09.2010 |
| | | CN101836055 A | 15.09.2010 |
| | | US2011005513 A | 13.01.2011 |
| | | EP2307817 A | 13.04.2011 |
| ES2321576 AB | 08.06.2009 | WO2010076350 A | 08.07.2010 |
| WO2009029275 A | 05.03.2009 | WO2009023063 A | 19.02.2009 |
| | | AU2008293906 A | 05.03.2009 |
| | | AU2008293904 A | 05.03.2009 |
| | | WO2009029277 A | 05.03.2009 |
| | | US2009056703 A | 05.03.2009 |
| | | US2009056699 A | 05.03.2009 |
| | | US2009056701 A | 05.03.2009 |
| | | US2009084374 A | 02.04.2009 |
| | | MX2010002250 A | 01.06.2010 |
| | | MX2010002251 A | 01.06.2010 |
| | | EP2193314 A | 09.06.2010 |
| | | CN101836054 A | 15.09.2010 |
| | | CN101836055 A | 15.09.2010 |
| | | US2011005513 A | 13.01.2011 |
| | | EP2307817 A | 13.04.2011 |
| DE102008021730 A | 06.11.2008 | NONE | |
| DE102007052338 A | 07.05.2009 | NONE | |
| JP2008057823 A | 13.03.2008 | NONE | |

Form PCT/ISA/210 (patent family annex) (July 2009)

**INTERNATIONAL SEARCH REPORT**

International application No.

PCT/ES2011/000171

CLASSIFICATION OF SUBJECT MATTER

*F24J2/10* (2006.01)
*F24J2/24* (2006.01)
*F24J2/54* (2006.01)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2321576 B2
- WO 2009029277 A2
- WO 2009023063 A2
- ES 232157682